# EUROPÄISCHE PATENTSCHRIFT

(11) **EP 2 171 298 B1**
(45) Veröffentlichungstag und Bekanntmachung des Hinweises auf die Patenterteilung: **13.11.2013**
(21) Anmeldenummer: 08758968.5
(22) Anmeldetag: 03.06.2008
(51) Int. Cl.: F16C 33/12, F16C 33/14

(54) **GLEITLAGERVERBUNDSTOFF**
SLIDING BEARING COMPOSITE
MATÉRIAU COMPOSITE POUR PALIERS LISSES

(30) Priorität: 28.07.2007 DE 102007035497
(43) Veröffentlichungstag der Anmeldung: 07.04.2010
(73) Patentinhaber: KS Gleitlager GmbH, 68789 St. Leon-Rot (DE)
(72) Erfinder: SEREMETI, Megjit, 26871 Papenburg (DE); SCHUBERT, Werner, 69168 Wiesloch (DE); REINICKE, Rolf, 76669 Bad Schönborn (DE)
(74) Vertreter: Dreiss
(86) Internationale Anmeldenummer: PCT/EP2008/004404
(87) Internationale Veröffentlichungsnummer: WO 2009/015718

(56) Entgegenhaltungen:
- WO-A-2005/015037
- DE-A1-102005 023 308

## Beschreibung

Die Erfindung betrifft einen Gleitlagerverbundwerkstoff mit einer Trägerschicht aus Stahl und einer darauf aufgebrachten Lagermetallschicht auf Basis einer Kupfer-Zinn-Bronze.

Gleitlagerverbundwerkstoffe dieser Art sind bekannt. Beispielsweise umfasst ein gattungsgemäßer Gleitlagerverbundwerkstoff gemäß DE 199 63 385 C1 auf der Lagermetallschicht eine Zwischenschicht aus Reinnickel (Nickeldamm) und eine weitere Zwischenschicht aus Zinn und Nickel und darauf eine dem Gleitpartner zugewandte Gleitschicht auf Zinn-Kupfer-Basis. Die beiden Zwischenschichten dienen als Diffusionssperre für Zinn und Nickel; sie sind also tribologisch nicht unmittelbar beansprucht.

DE 10 2005 023 308 A1 offenbart einen ähnlichen Gleitlagerverbundwerkstoff. Als Lagermetallschicht wird eine Kupfer-Nickel-Silizium-Bronze oder eine Kupfer-Nickel-Zinn-Bronze verwendet. Als Gleitschicht ist eine galvanische Schicht, eine Sputter-Schicht oder eine Kunststoffschicht genannt. Als galvanische Gleitschicht wird bevorzugt eine Zinnschicht, in die Zinn-Kupfer-Partikel eingelagert sind. Bei Verwendung dieser Zinnschicht als Gleitschicht werden vorzugsweise wiederum zwei Zwischenschichten eingesetzt, nämlich eine Zwischenschicht aus Reinnickel (Nickeldamm) und eine weitere Zwischenschicht aus Zinn und Nickel. Als galvanische Gleitschicht weiter genannt ist eine Wismut-Schicht, jedoch ohne Bezug oder Hinweis auf eine Zwischenschicht.

Es gibt des Weiteren Gleitlagerverbundwerkstoffe mit einer galvanischen Deckschicht aus Wismut oder aus einer Wismutlegierung gemäß DE 10 2004 015 827 B4. Bei diesem Gleitlagerverbundwerkstoff wird eine bestimmte kristallographische Struktur bei der Wismut-Deckschicht erzeugt, welche die Ölbenetzbarkeit und die Anti-Blockierungseigenschaften verbessern soll. Die Deckschicht soll hier dauerhaft als tribologisch wirksame Gleitschicht dienen. Auch gemäß DE 100 32 624 C2 wird eine Wismut-Deckschicht derart kristallisiert, dass ihre Härte und Sprödigkeit derart optimiert werden, dass sie als tribologisch aktive Schicht hohen Belastbarkeiten standzuhalten vermag.

Der vorliegenden Erfindung liegt die Aufgabe zugrunde, einen Gleitlagerverbundwerkstoff der eingangs beschriebenen Art anzugeben, der auf wirtschaftliche Weise herstellbar ist und den insbesondere bei motorischen Anwendungen auftretenden Belastungen standzuhalten vermag. Unter motorischen Anwendungen wird nachfolgend insbesondere die Verwendung des Gleitlagerverbundwerkstoffs bei einer Gleitlagerschale oder Gleitlagerbuchse zur Lagerung der Kurbelwelle (Hauptlagerschale) oder als Pleuellagerschale oder -buchse bei Brennkraftmaschinen verstanden.

Diese Aufgabe wird bei einem gattungsgemäßen Gleitlagerverbundwerkstoff erfindungsgemäß dadurch gelöst, dass unmittelbar auf die Lagermetallschicht eine 3 bis 8 µm dicke Zinn-Nickel-Schicht und unmittelbar darauf eine 7 bis 15 µm dicke Wismut-Schicht galvanisch aufgebracht ist und dass die Härte gemessen nach Härteprüfverfahren Vickers DIN EN ISO 6507 und gemessen ausgehend von der Oberseite der galvanisch aufgebrachten Wismut-Schicht 20 - 30 HV_{0,025} beträgt.

Der erfindungsgemäße Gleitlagerverbundwerkstoff zeichnet sich dadurch aus, dass er neben der Trägerschicht und der Lagermetallschicht nur zwei weitere verhältnismäßig dünne Schichten benötigt. Die galvanisch aufgebrachte, dem Gleitpartner unmittelbar zugewandte Wismut-Schicht wirkt bei dem erfindungsgemäßen Gleitlagerverbundwerkstoff bzw. einem hieraus hergestellten Gleitlager gewissermaßen als Einlaufschicht. Ihre Härte gemessen an einem Querschnitt des Gleitlagerverbundwerkstoffs in Ebenenrichtung nach Härteprüfverfahren Vickers DIN EN ISO 6507 beträgt lediglich 13 - 18 HV_{0,005}. Es handelt sich also an sich um eine mit nur begrenztem Tragvermögen ausgestattete Einlaufschicht.(Die Härtemessung in Ebenenrichtung der Wismut-Schicht ausgehend von einem Querschnitt gibt sehr gut die intrinsische Härte der Wismut-Schicht wieder). Es wurde jedoch erfindungsgemäß festgestellt, dass diese Wismut-Schicht im Zusammenwirken mit der darunter vorgesehenen Zinn-Nickel-Schicht stabilisiert werden kann. Die Härte des Gleitlagerverbundwerkstoffs gemessen nach Härteprüfverfahren Vickers DIN EN ISO 6507 ausgehend von der Oberseite der galvanisch aufgebrachten Wismut-Schicht beträgt wie vorausgehend erwähnt 20 - 30 HV_{0,025}, insbesondere 22 - 28 HV_{0,025}. Hierdurch wird aber die Tragfähigkeit (normal zur Ebenenrichtung) der galvanisch aufgebrachten Wismut-Schicht charakterisiert. Diese Tragfähigkeit wird in Kombination mit der Zinn-Nickel-Schicht erfindungsgemäß erhöht. Hierfür ist es ausreichend, dass eine einzige Zwischenschicht in Form der homogenen Zinn-Nickel-Schicht vorgesehen ist.

Während der Einlaufphase wird durch die Wismut-Schicht ein lagerzerstörender Einfluss von Partikeln und Abrieb zwischen den Gleitpartnern weitestgehend reduziert. Im Zuge des Betriebs eines unter Verwendung eines erfindungsgemäßen Gleitlagerverbundwerkstoffs hergestellten Gleitlagers übernimmt die im Stand der Technik bislang nur als Diffusionssperrschicht verwendete Zinn-Nickel-Schicht die Funktion einer tribologisch aktiven Laufschicht. Es wird auf diese Weise insgesamt ein Gleitlagerverbundwerkstoff bzw. ein Gleitlager erhalten, welches trotz der geringen Ausgangshärte und Tragfähigkeit der Wismut-Deckschicht und trotz einfachen und preiswerten Aufbaus geeignet ist, insbesondere bei motorischen Anwendungen auftretenden Belastungen standzuhalten. Diese Belastungen bzw. Belastbarkeiten liegen im Bereich 60 bis 85, insbesondere 60 bis 80 MPa (N/m²) ausgedrückt als Last/Fläche (projizierte Lagerbreite x Lagerdurchmesser).

Das erfindungsgemäße System aus galvanischer Wismut-Deckschicht mit verhältnismäßig moderater Tragfähigkeit und Nickel-Zinn-Schicht, welche unmittelbar auf der Lagermetallschicht aufgebracht und mit einer höheren Grundhärte und Grundbelastbarkeit ausgebildet ist als die Wismut-Deckschicht, eignet sich für die vorstehend genannten Anwendungen.

Als besonderes vorteilhaft erweist es sich, wenn das Verhältnis der Härte HV_{0,025} gemessen ausgehend von der Oberseite der galvanisch aufgebrachten Wismut-Schicht zur Härte HV_{0,005} der galvanisch aufgebrachten Wismut-Schicht gemessen an einem Querschnitt des Gleitlagerverbundwerkstoffs in Ebenenrichtung 1,4 - 2,0 [HV_{0,025}/HV_{0,005}], insbesondere 1,5 - 2,0 [HV_{0,025}/HV_{0,005}] beträgt. Durch dieses Verhältnis wird die erfindungsgemäße Stabilisierung und Erhöhung der Belastbarkeit bei der an sich weichen Wismut-Schicht deutlich.

Die Lagermetallschicht auf Basis einer Kupfer-Zinn-Bronze ist vorzugsweise aufgesintert. Es kann sich hierbei in vorteilhafter Weise um eine Kupfer-Zinn-Wismut-Bronze, insbesondere um CuSn10Bi8Zn3, oder um eine Kupfer-Zinn-Zink-Bronze handeln. Der erfindungsgemäße Gedanke der Kombination der Wismut-Deckschicht verhältnismäßig geringer Ausgangshärte mit der Zinn-Nickel-Schicht lässt sich auch bei Gleitlagerverbundwerkstoffen einsetzen, bei denen die Lagermetallschicht auf Messingbasis, insbesondere auf Basis von Sondermessingen, wie insbesondere CuZn31Si, CuZn20Al2Mn2Ni2 und ähnliche Legierungen, basiert ist.

## Patentansprüche

1. Gleitlagerverbundwerkstoff mit einer Trägerschicht aus Stahl und einer darauf aufgebrachten Lagermetallschicht auf Basis einer Kupfer-Zinn-Bronze, **dadurch gekennzeichnet, dass** unmittelbar auf die Lagermetallschicht eine 3 - 8 µm dicke Zinn-Nickel-Schicht und unmittelbar darauf eine 7 - 15 µm dicke Wismut-Schicht galvanisch aufgebracht ist und dass die Härte gemessen nach Härteprüfverfahren Vickers DIN EN ISO 6507 und gemessen ausgehend von der Oberseite der galvanisch aufgebrachten Wismut-Schicht 20 - 30 HV_{0,025} beträgt.

2. Gleitlagerverbundwerkstoff nach Anspruch 1, **dadurch gekennzeichnet, dass** die Härte gemessen nach Härteprüfverfahren Vickers DIN EN ISO 6507 und gemessen ausgehend von der Oberseite der galvanisch aufgebrachten Wismut-Schicht 22 - 28 HV_{0,025} beträgt.

3. Gleitlagerverbundwerkstoff nach Anspruch 1 oder 2, **dadurch gekennzeichnet, dass** die Härte HV_{0,005} der galvanisch aufgebrachten Wismut-Schicht gemessen an einem Querschnitt des Gleitlagerverbundwerkstoffs in Ebenenrichtung nach Härteprüfverfahren Vickers DIN EN ISO 6507 13 - 18 HV_{0,005} beträgt.

4. Gleitlagerverbundwerkstoff nach Anspruch 1, 2 oder 3, **dadurch gekennzeichnet, dass** das Verhältnis der Härte HV_{0,025} gemessen ausgehend von der Oberseite der galvanisch aufgebrachten Wismut-Schicht zur Härte HV_{0,005} der galvanisch aufgebrachten Wismut-Schicht gemessen an einem Querschnitt des Gleitlagerverbundwerkstoffs in Ebenenrichtung 1,4 - 2,0 [HV_{0,025}/HV_{0,005}], insbesondere 1, 5 - 2,0 [HV_{0,025}/HV_{0,005}] beträgt.

5. Gleitlagerverbundwerkstoff nach einem der vorstehenden Ansprüche, **dadurch gekennzeichnet, dass** die Lagermetallschicht aufgesintert ist.

6. Gleitlagerverbundwerkstoff nach einem der vorstehenden Ansprüche, **dadurch gekennzeichnet, dass** die Wismut-Schicht eine Dicke von 8 - 14 µm, insbesondere von 8 - 12 µm aufweist.

## Claims

1. A plain-bearing composite material with a support layer of steel and a bearing-metal layer applied thereto which is on the basis of a copper/tin bronze, **characterised in that** a tin/nickel layer 3 - 8 µm thick is electroplated directly onto the bearing-metal layer, and directly thereon a bismuth layer 7 - 15 µm thick, and **in that** the hardness measured according to the Vickers hardness test method DIN EN ISO 6507 and measured starting from the upper side of the electroplated bismuth layer is 20 - 30 HV_{0.025}.

2. A plain-bearing composite material according to Claim 1, **characterised in that** the hardness measured according to the Vickers hardness test method DIN EN ISO 6507 and measured starting from the upper side of the electroplated bismuth layer is 22 - 28 HV_{0.025}.

3. A plain-bearing composite material according to Claim 1 or 2, **characterised in that** the hardness HV_{0.005} of the electroplated bismuth layer measured on a cross-section of the plain-bearing composite material in the plane direction according to the Vickers hardness test method DIN EN ISO 6507 is 13 - 18 HV_{0.005}.

4. A plain-bearing composite material according to Claim 1, 2 or 3, **characterised in that** the ratio of the hardness HV_{0.025} measured starting from the upper side of the electroplated bismuth layer to the hardness HV_{0.005} of the electroplated bismuth layer measured on a cross-section of the plain-bearing composite material in the plane direction is 1.4 - 2.0 [HV_{0.025}/HV_{0.005}], in particular 1.5 - 2.0 [HV_{0.025}/HV_{0.005}].

5. A plain-bearing composite material according to one of the preceding claims, **characterised in that** the bearing-metal layer is sintered on.

6. A plain-bearing composite material according to one of the preceding claims, **characterised in that** the bismuth layer has a thickness of 8 - 14 µm, in particular of 8 - 12 µm.

## Revendications

1. Matériau composite pour palier lisse avec une couche de support en acier et une couche de métal anti-friction, appliquée sur ladite couche de support, à base d'un bronze cuivre-étain, **caractérisé en ce qu'**une couche d'étain-nickel épaisse de 3 à 8 µm est appliquée par galvanoplastie directement sur la couche de métal anti-friction et une couche de bismuth épaisse de 7 à 15 µm est appliquée par galvanoplastie directement sur ladite couche d'étain-nickel et la dureté mesurée selon le procédé d'essai de dureté Vickers DIN EN ISO 6507 et mesurée à partir de la face supérieure de la couche de bismuth appliquée par galvanoplastie est de 20 à 30 HV_{0,025}.

2. Matériau composite pour paliers lisses selon la revendication 1, **caractérisé en ce que** la dureté mesurée selon le procédé d'essai de dureté Vickers DIN EN ISO 6507 et mesurée à partir de la face supérieure de la couche de bismuth appliquée par galvanoplastie est de 22 à 28 HV_{0,025}.

3. Matériau composite pour paliers lisses selon la revendication 1 ou 2, **caractérisé en ce que** la dureté HV_{0,005} de la couche de bismuth appliquée par galvanoplastie mesurée dans un plan au niveau d'une coupe transversale du matériau composite pour paliers lisses selon le procédé d'essai de dureté Vickers DIN EN ISO 6507 est de 13 à 18 HV_{0,005}.

4. Matériau composite pour paliers lisses selon l'une quelconque des revendications 1, 2 ou 3, **caractérisé en ce que** le rapport de la dureté HV_{0,025} mesuré à partir de la face supérieure de la couche de bismuth appliquée par galvanoplastie sur la dureté HV_{0,005} de la couche de bismuth appliquée par galvanoplastie mesurée dans un plan au niveau d'une coupe transversale du matériau composite pour paliers lisses est de 1,4 à 2,0 [HV_{0,025}/HV_{0,005}], en particulier de 1,5 à 2,0 [HV_{0,025}/HV_{0,005}].

5. Matériau composite pour paliers lisses selon l'une quelconque des revendications précédentes, **caractérisé en ce que** la couche de métal anti-friction est frittée.

6. Matériau composite pour paliers lisses selon l'une quelconque des revendications précédentes, **caractérisé en ce que** la couche de bismuth présente une épaisseur de 8 à 14 µm, en particulier de 8 à 12 µm.
